# EUROPÄISCHE PATENTSCHRIFT

(11) **EP 3 083 265 B1**
(45) Veröffentlichungstag und Bekanntmachung des Hinweises auf die Patenterteilung: **01.12.2021**
(21) Anmeldenummer: 14827163.8
(22) Anmeldetag: 12.12.2014
(51) Int. Cl.: B60B 3/04, B60B 5/02, B60B 23/02, B60B 23/04, B60B 23/06

(54) **RAD MIT EINER RADFELGE UND EINER RADSCHEIBE**
WHEEL COMPRISING A WHEEL RIM AND A WHEEL DISK
ROUE DOTÉE D'UNE JANTE ET D'UN DISQUE

(30) Priorität: 18.12.2013 DE 102013114342
(43) Veröffentlichungstag der Anmeldung: 26.10.2016
(73) Patentinhaber: ThyssenKrupp Carbon Components GmbH, 01723 Wilsdruff STT Kesselsdorf (DE)
(72) Erfinder: WERNER, Jens, 01640 Coswig (DE); KÖHLER, Christian, 01099 Dresden (DE); MÄKE, Sandro, 01796 Dohma (DE); DRESSLER, Michael, 01159 Dresden (DE); BARTSCH, André, 01159 Dresden (DE)
(86) Internationale Anmeldenummer: PCT/DE2014/100444
(87) Internationale Veröffentlichungsnummer: WO 2015/090275

(56) Entgegenhaltungen:
- EP-A1- 2 607 097
- WO-A1-2010/093236
- DE-A1- 4 223 290
- FR-A1- 2 580 550
- JP-A- 2002 002 202

## Beschreibung

Die Erfindung betrifft ein Rad, insbesondere für Kraftfahrzeuge, mit einer Radfelge und einer Radscheibe, wobei die Radfelge ein Felgenbett aus Faserverbundmaterial aufweist.

Derartige mehrteilige Räder werden als Leichtbau-Rädern insbesondere für Kraftfahrzeuge angewandt. Die Leichtbau-Räder bestehen im Wesentlichen aus einer hohlprofilierten Radfelge mit einem Felgenbett aus Faserverbundmaterial und einer Radscheibe aus Faserverbundmaterial oder aus einem beliebigen anderen Material. Letztere sind auch als Leichtbau-Hybrid-Räder bekannt. Die Radscheiben der mehrteiligen Räder sind meist tellerförmig oder sternförmig ausgebildet, wobei die tellerförmigen Radscheiben geschlossene oder durchbrochene Speichenfelder aufweisen können.

Bei den mehrteiligen Rädern in hybrider Bauweise sind die Verbindungen zwischen der Radfelge und der Radscheibe aufgrund der unterschiedlichen Eigenschaften der Materialien problematisch. Bei Verbindungen zwischen der Radfelge und der Radscheibe, welche das Felgenbett aus Faserverbundmaterial durchdringen, stellen sich zudem Undichtigkeiten und Druckverlust im Rad ein.

Aus dem Dokument DE 10 2011 083 834 A9 ist ein Hybrid-Rad bekannt, bei dem ein Radstern aus Metall bzw. Metalllegierungen mittels eines Klemmringes an der Felge aus kohlenstofffaserverstärktem Kunststoff (CFK)befestigt wird. Der Radstern ist unter der Vorspannung des Klemmrings an schräg verlaufenden Konturen des Felgenbetts abgestützt. Unter den thermischen Belastungen des Radsterns während des Einsatzes des Rades kann der Klemmring an den Kontaktflächen in radialer Richtung gleiten. Im Einsatzfall ergibt sich durch diese Konstruktion eine ungünstige Relativbewegung zwischen dem Radstern und dem Felgenbett, die zu einem Schwingreibverschleiß am Faserverbundmaterial des Felgenbetts führt.

Ferner treten im Kontakt der Materialien, insbesondere im Kontakt des metallischen Radsterns mit den Kohlefasern des Felgenbetts, unerwünschte Korrosionserscheinungen auf.

Die Geometrie der Radsterns muss sich zudem eng an der Konturengestaltung des Felgenbetts orientieren.

Aus dem Dokument JP 2002 002202 A ist ein weiteres Hybrid-Rad bekannt, bei dem ein Radstern aus Aluminiumlegierung mit einer Felge aus verstärktem Kunststoff verbunden ist, wobei der Radstern an fünf im Tiefbett des Felgenbetts der Kunststoff-Felge ausgebildeten Vorsprüngen mit den vorstehend beschriebenen nachteiligen Folgen befestigt ist.

Der Erfindung liegt daher die Aufgabe zugrunde, eine Radkonstruktion bereitzustellen, die die Nachteile des Standes der Technik beseitigt und insbesondere eine verbesserte Anbindung der Radscheibe an die Radfelge gewährleistet.

Die Aufgabe wird durch ein Rad mit den Merkmalen des Patentanspruches 1 gelöst.

Erfindungsgemäß ist die Radscheibe mittels eines Anschlusselementes mit der Radfelge, insbesondere dem Felgenbett der Radfelge, verbunden, wobei das Anschlusselement ein Separations- und Distanzmittel zur mittelbaren Anbindung der Radscheibe an das Felgenbett ist und derart ausgebildet und dem Felgenbett zugeordnet ist, dass die verbundene Radscheibe zum Felgenbett berührungsfrei angeordnet ist.

Das Anschlusselement schließt erfindungsgemäß an das Felgenbett der Radfelge an, ohne es zu durchdringen und ist mit einem vom Felgenbett separierten Anschlussbereich für den Anschluss der Radscheibe ausgebildet. Dies ermöglicht eine mittelbare Verbindung der Radscheibe mit der Radfelge, ohne dass die angeschlossene Radscheibe das Felgenbett berührt. Das erfindungsgemäße Anschlusselement ist eine Separations- und Distanzmittel zur mittelbaren Anbindung der Radscheibe an das Felgenbett.

Die angefügte Radscheibe kontaktiert im Montagezustand lediglich das Anschlusselement und ist in einer zum Felgenbett vollständig getrennten und beabstandeten Anordnung angeschlossenen. Der Kraftfluss erfolgt vom Felgenbett ausschließlich über das Anschlusselement in die Radscheibe und umgekehrt. Die Radscheibe, die sich aufgrund der thermischen Belastungen (z.B. durch Bremswärme) während des Betriebseinsatzes des Rades ausdehnt, stützt sich auch in diesem Zustand nur gegen das Anschlusselement ab.

Hierdurch wird ein ungünstiger Reibschluss der Radscheibe mit dem Felgenbett und damit eine Faserbelastung des Faserverbundmaterials vermieden. Die Verbindung zwischen Radscheibe und Radfelge wird unter den Betriebsbedingungen verschleißärmer und zuverlässiger.

Zudem erfolgt durch den erfindungsgemäß separierten Kraftfluss eine gleichmäßigere Spannungs- und Lastverteilung im Gefüge des Faserverbundmaterials des Felgenbetts, die die Belastung des Felgenbettes unter der Verbindung mindert.

Durch die mittelbare Verbindung der Radscheibe mit der Radfelge eröffnen sich zudem Anwendungsmöglichkeiten, bei dem das Anschlusselement verschiedene nützliche Separations- und Trennfunktionen der Radscheibe gegenüber dem Felgenbett übernimmt.

So kann die Radscheibe ohne besondere Rücksichtnahme auf die werkstofftechnischen Besonderheiten des Faserverbundmaterials des Felgenbetts mit üblichen, bewährten Fügemethoden(z. B. Löten, Schweißen, Schrauben)an das Anschlusselement angebracht werden.

Weiter bedarf die in der erfindungsgemäßen Ausführung mit der Radfelge zu verbindende Radscheibe keiner auf das Felgenbett abgestimmten Anschlusskonturen, woraus sich mehr Wahl- und Gestaltungsfreiheit bei der Geometrie der zu verwendenden Radscheiben ergibt.

In einer vorteilhaften Ausführungsform weist das Anschlusselement wenigstens eine Anschlussfläche auf, die korrespondierend mit einer bzw. jeweils einer Anschlussfläche der Radscheibe ausgebildet und angeordnet ist.

Hiernach kontaktieren sich das Anschlusselement und die Radscheibe zur Befestigung der Radscheibe nicht nur vollständig getrennt zum Felgenbett sondern auch in einem homogenen, flächigen Verbund, der im Betrieb des Rades eine sichere Verbindung gewährleistet und für eine noch gleichmäßigere Spannungs- und Lastverteilung in der Radgeometrie und insbesondere im Felgenbett sorgt.

Vorteilhafter Weise ist das Anschlusselement im Bereich des Tiefbetts dem Felgenbett zugeordnet. Hierdurch wird eine innenseitig, im Felgenhohlraum des Felgenbetts herausragende Position des Anschlusselements gegenüber der übrigen inneren Kontur des Felgenbetts geschaffen, die es auf einfache Weise ermöglicht, die Radscheibe beabstandet zur inneren Kontur des Felgenbetts mit dem Anschlusselement zu verbinden. Der Felgenhohlraum der Radfelge wird durch die umlaufende, innere Kontur des Felgenbetts gebildet, wobei das Tiefbett den inneren Felgenhohlraum verengt.

Nach einer bevorzugten Ausführungsform ist vorgesehen, dass das Anschlusselement sich in dem Felgenhohlraum der Radfelge erstreckend ausgebildet und zugeordnet ist.

Damit wird ein das Felgenbett innenseitig überragender, partieller Überstand des Anschlusselements geschaffen, so dass eine oder mehrere, gegenüber der inneren Kontur des Felgenbetts abgesetzte, in den Felgenhohlraum weisende und / oder erstreckte Anschlussflächen für den Anschluss der Radscheibe bereitgestellt werden können, die die Vielfalt der Befestigungsmöglichkeiten und die Zuverlässigkeit der Anbindung der Radscheibe erhöht.

Durch insbesondere die sich in den Felgenhohlraum erstreckenden, schräg oder seitwärts weisenden Anschlussflächen wird eine ergänzende, axial wirkende Abstützung der Radscheibe ermöglicht, die für eine homogene Verteilung des Lasteintrages auf das Felgenbett sorgt.

Die Radscheibe kann nach dieser Ausführung z.B. durch eine betriebssichere Klemm- oder Schraubverbindung axial gegen die seitlichen Anschlussflächen des Anschlusselements verspannt werden.

So können die durch die betriebsbedingte Wärmedehnung der Radscheibe entstehenden Kräfte weitestgehend durch einen Reibschluss an den korrespondierenden seitlichen Anschlussflächen zwischen der Radscheibe und dem lastaufnehmenden Anschlusselement auf das Anschlusselement übertragen werden.

Ist nach einer weiteren vorteilhaften Ausführung das Anschlusselement fest mit dem Felgenbett verbunden und als ein fester Bestandteil der Radfelge ausgebildet, wird eine, vorgefertigte Einheit einer Radfelge für eine separate, aufwandsarme Montage der Radscheibe an die Radfelge zur Verfügung gestellt. Vorzugsweise ist die mit dem Anschlusselement vorgefertigte Radfelge für eine universelle Radscheibenmontage ausgebildet.

Zur Realisierung dieser festen Verbindung kann das Anschlusselement beispielsweise während der Fertigung des Felgenbetts aus Faserverbundmaterial mit dessen Preform verbunden und anschließend mit dieser konsolidiert werden.

An das am Felgenbett angefügte Anschlusselement kann nachfolgend der Anschluss einer Radscheibe mittels üblicher Fügetechnologien erfolgen.

Nach einer günstigen Ausführungsform ist das Anschlusselement derart ausgebildet und dem Felgenbett zugeordnet, dass das Anschlusselement zumindest abschnittsweise im Felgenbett integriert angeordnet ist. Damit erhält die mittelbare Verbindung der Radscheibe mit der Radfelge einen festen Formenschluss des Anschlusselements mit dem Felgenbett und weist eine geringere optische Auffälligkeit auf.

Das Anschlusselement kann neben der erfindungsgemäßen konstruktiven Gestaltung durch besonderen Materialeinsatz weitere Separations- und Trennfunktionen übernehmen, die das Felgenbett mechanisch, chemisch oder thermisch von der Radscheibe abschirmen.

In einer weiteren vorteilhaften Ausführung besteht das Anschlusselement aus einem Material, das einen im Verhältnis zum thermischen Ausdehnungskoeffizient des Faserverbundmaterials des Felgenbettes zumindest ähnlichen thermischen Ausdehnungskoeffizient aufweist.

Derartige Eigenschaften besitzen z.B. spezielle Stahllegierungen. Sie sind beispielsweise unter der Bezeichnung Invar^{®} oder Pernifer^{®} bekannt. Dadurch wird im Einsatzfall des Rades unter thermischer Belastung (z.B. durch Bremswärme) ein annähernd gleiches Wärmedehnungsverhalten des Anschlusselements und des Felgenbetts erzeugt.

Infolge des annähernd gleichen thermischen Dehnungsverhaltens von Anschlusselement und Felgenbett wird eine ausgleichende Verformung beider Bauteile erreicht, wodurch Spannungen im Felgenbett vermieden werden, die zu Rissen im Faserverbundmaterial des Felgenbettes führen können.

Mit dieser vorteilhaften Ausführung wird im Belastungsfall des Rades lediglich eine Spannung zwischen der Radscheibe und Anschlusselement erzeugt, wobei das kraftaufnehmende Anschlusselement die Wärmedehnungskompensation übernimmt.

Hierdurch kann die Spannungsverteilung weiter verbessert und die Belastung der verbundenen Radkonstruktion zusätzlich verringert werden.

Besonders vorteilhaft ist es, wenn in einem Kontaktbereich zwischen dem Felgenbett und dem Anschlusselement, also zwischen einer dem Anschlusselement zugewandten Kontaktfläche des Felgenbetts und einer dem Felgenbett zugewandten Kontaktfläche des Anschlusselements eine Trennschicht angeordnet ist, die eine mittelbare Verbindung zwischen Felgenbett und Anschlusselement erzeugt, die in Kombination mit dem Anschlusselement weitere Separations- und Trennfunktionen zwischen Radfelge und Radscheibe übernehmen kann. Durch den Einsatz der Trennschicht ergibt sich zudem ein Gewinn an Wahlfreiheit für das zu verwendende Material des Anschlusselements und der Radscheibe.

Vorzugsweise ist die Trennschicht auf dem Anschlusselement ausgebildet, z.B. durch eine entsprechende Beschichtung des Anschlusselementes. Das verringert den konstruktiven Aufwand bei der mittelbaren Verbindung von Felgenbett und Anschlusselement und verbessert die Lagestabilität der Trennschicht zwischen dem Felgenbett und dem Anschlusselement.

Mit ebensolchen Vorteilen verbunden ist es, wenn ergänzend oder alternativ zur vorstehend beschriebenen Trennschicht in einem Anschlussbereich zwischen dem Anschlusselement und der Radscheibe eine Trennschicht angeordnet ist. Vorzugsweise ist die Trennschicht durch eine entsprechende Beschichtung des Anschlusselements ausgebildet.

Bei einer besonders vorteilhaften Ausführungsform weist das Anschlusselement und / oder die Trennschicht eine Elastizität auf, die größer ist als die Elastizität des Faserverbundmaterials des Felgenbettes.

Das Anschlusselement oder die Trennschicht bewirkt infolge ihrer elastischen Eigenschaften im Belastungsfall der Radscheibe eine Dehnungskompensation durch Verformung und Anpassung der Schichtdicke.

Insbesondere bei einem Rad in hybrider Bauweise mit beispielsweise einer Radscheibe aus Aluminium, dehnt sich die Radscheibe unter der Wärmeentwicklung im Einsatzfall deutlich mehr aus als das Felgenbett. Durch diese Ausgestaltung mit elastischer Trennschicht wird eine verbesserte Spannungs- und Lastverteilung in der Radfelge mit geringerer Spannungsübertragung auf das Felgenbett bewirkt, wodurch die Belastungen der Anbindung an das Felgenbett gemindert werden kann.

Diese Ausführung kann z.B. angewandt werden, falls aus bestimmten funktionalen Anforderungen ein Anschlusselement mit einem vom Felgenbett abweichenden Wärmedehnungseigenschaften, wie z.B. ein Anschlusselement aus Metall, eingesetzt werden soll.

Vorzugsweise besteht die Trennschicht aus einem gummielastischen Kunststoff, wie z.B. aus dem Elastomer, der als Klebeschicht zwischen dem Felgenbett und dem Anschlusselement ausgebildet ist. Der Werkstoff zeichnet sich neben seinen guten elastischen Eigenschaften durch ein günstiges Verhältnis zwischen Gewicht und Steifigkeit und durch seine guten Klebeeigenschaften aus.

Nach einer besonders bevorzugten Ausführungsform besteht das Anschlusselement und / oder die Trennschicht aus einem elektrisch nichtleitenden Material.

Insbesondere bei der Verwendung von Radscheiben aus Metall wird durch das nicht elektrisch leitende Anschlusselement bzw. durch die nicht elektrisch leitende Trennschicht eine galvanische Trennung zwischen der Radscheibe und dem Felgenbett aus Faserverbundmaterial realisiert, die galvanische Spannungen zwischen dem, insbesondere kohlenstoffverstärkten Kunststoff des Felgenbetts und der metallischen Radscheibe vermeidet.

Korrosionserscheinungen in der Radscheibe werden so nachhaltig unterbunden.

Die nichtleitende Trennschicht kann z.B. aus Keramik, aus einem Polymer, oder aus glasfaserverstärktem Kunststoff (GFK) bestehen.

Als Material für das nicht elektrisch leitende Anschlusselement eignet sich insbesondere GFK.

Nach einer weiteren vorteilhaften Weiterbildung ist vorgesehen, dass die Trennschicht aus einem Material besteht, welches einen im Verhältnis zum Wärmeleitwiderstand des Materials des Anschlusselementes größeren Wärmeleitwiderstand aufweist. Eine Trennschicht aus einem Material mit derart hohem Wärmeleitwiderstand, wie z. B. GFK oder Keramik, erzeugt einen thermischen Widerstand, der die Übertragung von fertigungs- oder betriebsbedingten Wärmelasten auf das Felgenbett hemmt und das Material des Felgenbetts vor zu hohen Temperaturen schützt, was sich positiv auf die Beanspruchbarkeit des Felgenbetts auswirkt.

Insbesondere können durch eine solche Trennschicht thermische Belastungen infolge thermischer Fügetechniken, wie dem Schweißen zum Anbringung der Radscheibe, oder durch Bremswärme im Betrieb des Rades gut kompensiert werden.

Besteht das Anschlusselement aus einem Material, welches einen im Verhältnis zum Wärmeleitwiderstand des Materials der Radscheibe größeren Wärmeleitwiderstand aufweist, können ebensolche vorteilhafte Wirkungen erzielt werden, insbesondere kann das Felgenbett günstig vor der thermischen Belastung durch die Bremswärme im Betrieb des Rades geschützt werden.

Vorzugsweise besteht das Anschlusselement und /oder die Trennschicht aus glasfaserverstärktem Kunststoff (GFK). Neben der hervorragenden galvanischen und thermischen Trennfunktionen, die ein Anschlusselement oder eine Trennschicht aus GFK übernimmt, weist dieses Material gute Klebeeigenschaften und eine hohe Festigkeit bei geringem Gewicht auf.

Ein Anschlusselement aus GFK bzw. eine Trennschicht aus GFK ist für eine feste stoffliche Verbindung mit dem Felgenbett und für die sichere Befestigung einer Radscheibe unter Leichtbau-Anforderungen besonders gut geeignet.

Das Material schafft daher einen sehr guten stofflichen Verbund mit dem Faserverbundmaterial des Felgenbetts und gewährleistet unter Leichtbau-Anforderungen eine sichere, mittelbare Befestigung der Radscheibe an die Radfelge.

Das günstige Verhältnis von Festigkeit und Gewicht des GFK erlaubt es problemlos isolierende Trennschichten aus GFK mit größeren Schichtdicken zu realisieren.

Infolge der geringen Steifigkeit des GFK, weist ein Anschlusselement aus GFK einen geringen Verformungswiderstand auf, der sich bei der betriebsbedingten thermischen Belastung der Radkonstruktion (z. B. durch Bremswärme) spannungsmindernd auf das Felgenbetts auswirkt.

In einer bevorzugten Ausgestaltung weist das Anschlusselement und /oder die Radscheibe ein oder mehrere Dichtelemente auf, die das Anschlusselement gegen das Felgenbett und/oder gegen die Radscheibe abdichtet. Damit kann das Eindringen von Feuchtigkeit in die Fügebereiche zwischen dem Felgenbett und dem Anschlusselement bzw. zwischen der Radscheibe und dem Anschlusselement verhindert werden. Insbesondere bei kritischen Materialkombinationen, wie z.B. einem Anschlusselement aus Edelstahl und einer Radscheibe aus Aluminium, kann so Kontaktkorrosion weitestgehend vermieden werden.

In einer besonders bevorzugten Ausgestaltung ist das Anschlusselement ringförmig ausgebildet, wodurch eine großflächige, über den Umfang verteilte homogene Krafteinleitung aus der Radscheibe in das Felgenbett und umgekehrt bewirkt wird. Die Homogenisierung der Kraftverteilung ist besonders effizient beim Anschluss von Speichen einer sternförmigen Radscheibe an das ringförmige Anschlusselement, bei dem die punktuelle Krafteinleitung der Speichen der Radscheibe in eine umfangsflächige Kraftverteilung im Felgenbett gewandelt wird.

Zudem ermöglicht das ringförmig zur Verfügung stehende Anschlusselement eine erhebliche Gestaltungsfreiheit bei der Wahl der Geometrie der anzuschließenden Radscheibe.

Ist das Anschlusselement mehrteilig ausgebildet, kann dies die Befestigung des Anschlusselementes an die Radfelge bzw. an das Felgenbett erleichtern. Auf diese Weise können beispielsweise bestimmte Konturen des Felgenbetts, wie das Tiefbett, beiderseits umschlossen werden. Zudem ermöglicht dies eine weitere Materialvariabilität, in dem die Teile des Anschlusselementes entsprechend der Anforderungen aus verschiedenen Materialien bestehen können.

Eine konstruktiv und gestalterisch günstige Ausführungsform sieht vor, dass die Radscheibe mittels mehrerer, vorzugsweise umfänglich der Radfelge angeordneter Anschlusselemente mit der Radfelge, respektive mit dem Felgenbett, verbindbar ist. Insbesondere bei der Verwendung von sternförmigen Radscheiben mit Speichen, können einzelne Anschlusselemente ausschließlich im Bereich der Anschlussenden der Speichen vorgesehen sein. Dies kann zu gestalterischen Vorzügen führen und verhilft zu Masseeinsparungen.

Diese und weitere aus den Patentansprüchen, der Beschreibung der Ausführungsbeispiele und den Zeichnungen hervorgehenden Merkmale können jeweils für sich oder in Kombination als vorteilhafte Ausführungsformen der Erfindung verwirklicht sein, für die hier Schutz beansprucht wird.

Das erfindungsgemäße Rad wird nachfolgend an Ausführungsbeispielen näher erläutert. Die zugehörigen Zeichnungen zeigen in einer schematischen Darstellung in
- Fig. 1a: eine teilweise Schnittdarstellung eines erfindungsgemäßen Rades mit einem zweiteiligen ringförmigen Anschlusselement,
- Fig. 1b: eine teilweise Schnittdarstellung des Rades nach Fig. 1a mit einer Trennschicht auf dem zweiteiligen ringförmigen Anschlusselement,
- Fig. 2: eine teilweise Schnittdarstellung eines Rades nach einem zweiten Ausführungsbeispiel mit einem fest mit dem Felgenbett verbundenen ringförmigen Anschlusselement,
- Fig. 3: eine teilweise Schnittdarstellung eines Rades nach einem dritten Ausführungsbeispiel mit einem fest mit dem Felgenbett verbundenen ringförmigen Anschlusselement aus GFK
- Fig. 4: eine teilweise Schnittdarstellung eines Rades nach einem vierten Ausführungsbeispiel mit einem weiteren ringförmigen Anschlusselement aus GFK,
- Fig. 5: eine teilweise Schnittdarstellung eines Rades nach einem fünften Ausführungsbeispiel mit mehreren ringsegmentförmigen Anschlusselementen,
- Fig. 6: eine teilweise Schnittdarstellung eines Rades nach einem sechsten Ausführungsbeispiel mit einem elfteiligen Anschlusselement.

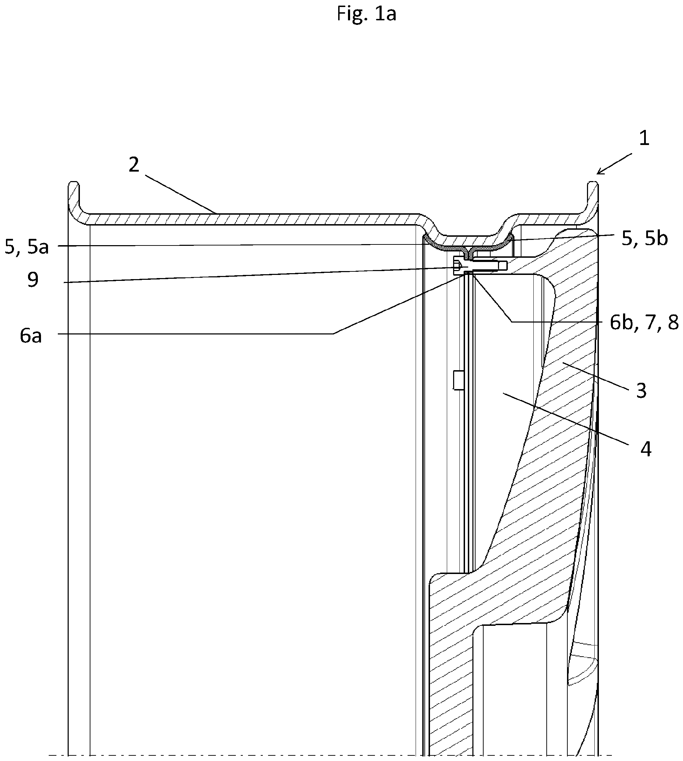

Fig. 1a zeigt in einem ersten Ausführungsbeispiel eine erfindungsgemäße Radkonstruktion mit einer Radfelge 1, die ein Felgenbett 2 aus kohlefaserverstärktem Kunststoff (CFK) aufweist, und mit einer tellerförmigen Radscheibe 3 mit durchbrochenem Speichenfeld und einem Speichenring 4 aus Aluminium. Die Radscheibe 3 ist mittels eines zweiteiligen Anschlusselements 5 aus Edelstahl mit dem Felgenbett 2 der der Radfelge 1 verbunden. Das Anschlusselement 5 besteht aus zwei ringförmigen Schalenteilen 5a, 5b, die beidseitig ein Tiefbett des Felgenbetts 2 umfassen und radial nach innen erstreckte Flanschringe 6a, 6b aufweisen. Der Speichenring 4 der Radscheibe 3 liegt mit seiner Stirnfläche 7 stirnseitig an einer dazu korrespondierenden, axial weisenden, Anschlussfläche 8 des Flanschringes 6b des Schalenteils 5b an und ist durch mehrere Befestigungsschrauben 9 am Anschlusselement 5 befestigt. Durch die an das Tiefbett angepasste Form der Schalenteile 5a, 5b wird zugleich mit der Schraubverbindung eine Klemmwirkung des Anschlusselementes 5 an das Felgenbett 2 bewirkt. Die lösbare Verbindung des Anschlusselements 5 mit dem Felgenbett 2 und die der Radscheibe 3 mit dem Anschlusselement 5 kann jeweils durch eine stoffliche Verbindung, wie beispielsweise durch Verkleben, ergänzt werden, was die Festigkeit der Verbindungen erhöht.

Die Radscheibe 3 hat durch die mittelbare Verbindung mit dem Felgenbett 2 mittels des Anschlusselements 5 keinen direkten Kontakt mit dem Felgenbett 2. Die Stirnfläche 7 des Speichenrings 4 als Anschlussfläche 7 der Radscheibe 1 kontaktiert ausschließlich die Anschlussfläche 8 des Flanschringes 6b.

Die radial erstreckten Flanschringe 6a, 6b der Schalenteile 5a, 5b des Anschlusselementes 5 sind derart radial nach innen in den Felgenhohlraum erstreckt, dass die daran ausgebildete axial weisende Anschlussfläche 8 mit der Stirnfläche 7 des Speichenrings 4 kontaktieren kann. Die befestigte Radscheibe 3 ist sodann in einem solchen Abstand zum Felgenbett 2 angeordnet, dass auch im Betriebszustand unter mechanischer Belastung (dynamische Schwingungen, Kräfte, Momente) und thermische Belastung (Wärmedehnung) kein Kontakt bzw. Reibschluss zwischen dem Felgenbett 2 und der Radscheibe 3 stattfindet. Der Kraftfluss der zu übertragenden Kräfte und Momente erfolgt von der Radscheibe 3 ausschließlich über das Anschlusselement 5 in das Felgenbett 2 und erzeugt so eine gleichmäßigere, belastungsmindernde Spannungs- und Lastverteilung im Gefüge des CFK des Felgenbetts 2.

Die beabstandete, berührungsfreie Anordnung der Radscheibe 3 zum Felgenbett 2 ermöglicht es der Radscheibe 3, sich unter den thermischen und mechanischen Belastungen während des Betriebs des Rades weitestgehend frei zu verformen, ohne das Felgenbett 2 zu beschädigen und die Kohlefasern des Faserverbundmaterials des Felgenbetts 2 zu verschleißen.

Durch die mittelbare Anbindung der Radscheibe 3 an das Anschlusselement 5 werden Relativbewegungen zwischen der Radscheibe 3 und dem Felgenbett 2, die zu Schwingreibverschleiß führen könnten, weitestgehend vermieden.

Die äußere umlaufende Kontur der Radscheibe 3 ist infolge der berührungslosen Anordnung zum Felgenbett 2 weitestgehend unabhängig von der inneren umlaufenden Kontur des Felgenbetts 2 gestaltet.

Die beiden Schalenteile 5a, 5b des Anschlusselementes 5 bestehen aus einer besonderen Stahllegierung, wie Invar^{®} oder Pernifer^{®}, die einen annähernd gleichen thermischen Ausdehnungskoeffizient wie der des GFK des Felgenbettes 2 aufweist.

Hierdurch erzeugt die im Einsatzfall des Rades von der Radscheibe 3 auf das Anschlusselement 5 und das Felgenbett 2 übertragene Bremswärme ein annähernd gleiches Wärmedehnungsverhalten des Anschlusselements 5 und des Felgenbetts 2. Die zueinander angepasste Verformung des Anschlusselements 5 und des Felgenbetts 2 vermeidet so Spannungen im Felgenbett 2 aus CFK infolge der Wärmeentwicklung im Betriebszustand des Rades.

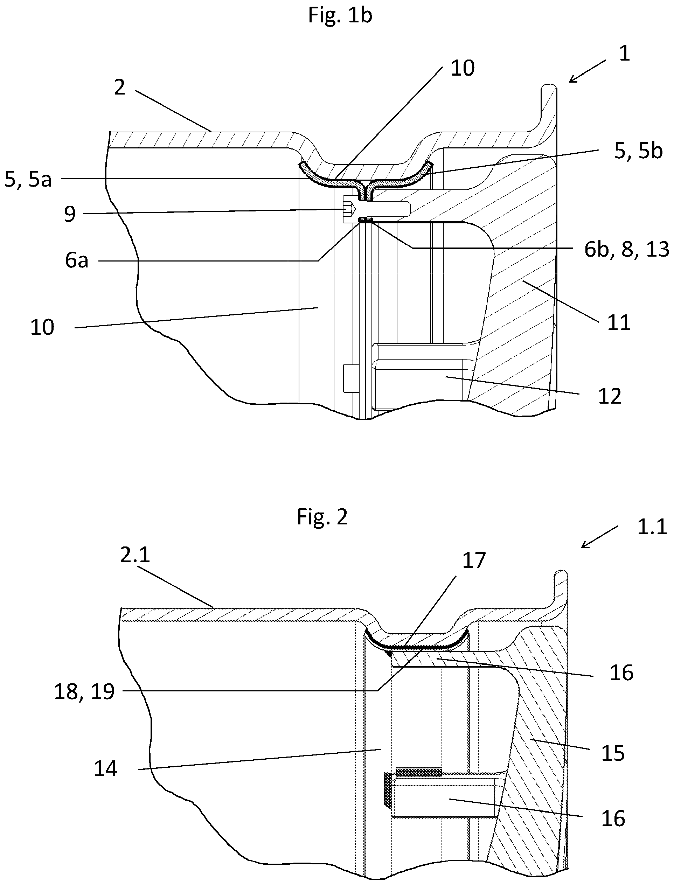

In Fig. 1b ist eine zur Fig. 1a analoge Radkonstruktion dargestellt, bei der im Unterschied zur Fig. 1a die Schalenteile 5a, 5b des Anschlusselements 5 aus Stahl bestehen und jeweils eine vollflächige Beschichtung mit einer elastischen Trennschicht 10 aus einem Elastomer, wie KRAIBON^{®}, aufweisen.

In Fig. 1b ist in einem weiteren Unterschied zur Radscheibe 3 nach Fig. 1a eine sternförmige Radscheibe 11 mit einzelnen Speichenenden 12 aus Aluminium mittels des Anschlusselements 5 an das Felgenbett 2 der Radfelge 1 angebunden, wobei die Stirnflächen 13 der Speichenenden 12 der Radscheibe 11 an der axial weisenden Anschlussfläche 8 des Flanschringes 6b des Schalenteils 5b flächig anliegen und die Speichen 12 der Radscheibe 11 mittels der Befestigungsschrauben 9 am Anschlusselement 5 befestigt sind.

Das ringförmige Anschlusselement 5 nach diesem Ausführungsbeispiel ermöglicht es ebenfalls die Radscheibe 11 mit den vorbeschriebenen Vorteilen in einer kontaktfreien Distanz zum Felgenbett 2 anzuordnen und zu befestigen.

Die Beschichtung des Anschlusselements 5 mit der elastischen Trennschicht 10 schafft darüber hinaus weitere Vorteile.

Die Beschichtung der Schalenteile 5a, 5b des Anschlusselementes 5, insbesondere die Beschichtung auf den dem Felgenbett 2 zugewandten Kontaktflächen der Schalenteile 5a, 5b und den Flanschringen 6a, 6b, dient zum einen der Kompensation der betriebsbedingten Dehnung der angeschlossenen Radscheibe 11. Zum anderen erzielt diese Beschichtung eine galvanische Trennung zwischen dem Anschlusselement 5 aus Stahl und dem Felgenbett 2 aus CFK zur Verminderung von Korrosionserscheinungen am Anschlusselement 5 infolge der Kohlefasern des CFK. Die Beschichtung der Flanschringen 6a, 6b im Anschlussbereich der Radscheibe 11 erzielt zusätzlich eine galvanische Trennung zwischen der Radscheibe 11 aus Aluminium und dem Anschlusselement 5 aus Stahl zur Verminderung von Korrosionserscheinungen an der Radscheibe 11.

In Fig. 2 ist in einer teilweisen Schnittdarstellung ein Rad nach einem zweiten Ausführungsbeispiel dargestellt. Das Rad weist eine Radfelge 1.1 mit einem Felgenbett 2.1 aus CFK und mit einem fest mit dem Felgenbett 2.1 verbundenen, ringförmigen Anschlusselement 14 aus Edelstahl (Pernifer^{®}) auf, an dem eine sternförmigen Radscheibe 15 mit einzelnen Speichenenden 16 aus Aluminium angeschlossen ist.

Nachfolgend sollen lediglich die Unterschiede gegenüber dem vorbeschriebenen Ausführungsbeispiel gemäß den Fig. 1a und 1b erläutert werden.

Das umlaufend einteilig ausgebildete, ringförmige Anschlusselement 14 umschließt vollständig das Tiefbett des Felgenbetts 2.1. Dieser besondere Formschluss des Anschlusselements 14 mit dem Felgenbett 2.1 ist beispielsweise durch ein prozessintegriertes Zusammenfügen der Bauteile während der Fertigung der Preform des Felgenbetts 2.1 aus CFK herstellbar. Bei der anschließenden Konsolidierung des Fasermaterials wird das Anschlusselement 14 zugleich mit dem Felgenbett 2.1 stoffschlüssig verklebt und damit unlösbar fest verbunden. Zwischen dem Felgenbett 2.1 und dem Anschlusselement 14 ist eine Trennschicht 17 aus Keramik vorgesehen, die als Beschichtung der dem Felgenbett 2.1 zugewandten Oberfläche des Anschlusselements 14 ausgebildet ist.

An dem ringförmigen Anschlusselement der Radfelge 1.1 ist eine radial nach innen, in den Felgenhohlraum weisende, umlaufende Anschlussfläche 18 für den Anschluss der Radscheibe 15 ausgebildet. Diese Anschlussfläche 18 ist durch ihre besondere Lage und Ausrichtung im Bereich des Tiefbetts von der übrigen inneren Kontur des Felgenbetts 2.1 nach innen abgesetzt und ermöglicht einen zum Felgenbett 2.1 kontaktfreien, beabstandeten Anschluss der Radscheibe 15 an die Radfelge 1.1.

Die jeweils äußeren Flanken 19 der Speichen 16 liegen an der radial nach innen weisenden, umlaufenden Anschlussfläche 18 des Anschlusselementes 14 an, wobei jedes Speichenende 16 durch dreiseitig ausgebildete Schweißnähte am Anschlusselement 14 befestigt ist.

Mit der Radkonstruktion nach dem zweiten Ausführungsbeispiel treten ebenfalls die bereits zum vorstehenden Ausführungsbeispiel erläuterten Vorteile ein.

Die flächige, radial nach innen weisende Anschlussfläche 18 ermöglicht zudem einen universellen Anschluss verschiedenartiger Radscheiben mit verschiedenen Fügetechniken, wie z. B. Löten, Schweißen oder Kleben.

Die vorgesehene Trennschicht 17 aus Keramik hat neben ihrer nicht leitenden Eigenschaft und der damit verbundenen galvanischen Schutzfunktion einen deutlich höheren Wärmeleitwiderstand als das Anschlusselement 14 aus Edelstahl. Ein beispielsweise durch das vorgesehene Anschweißen der Speichenenden 16 auf das Anschlusselement 14 ausgeübte Wärmeeintrag wirkt sich somit kaum auf das Felgenbett 2.1 aus. Insbesondere wird das Felgenbett 2.1 vor thermischen Belastungen geschützt und somit nachhaltig Schädigung des Matrixmaterials vermieden und Spannungen im Felgenbett 2.1 gemindert. Das Felgenbett 2.1 wird durch die Trennschicht 17 auch vor der thermischen Belastung infolge der im Betrieb des Rades entwickelten Bremswärme geschützt.

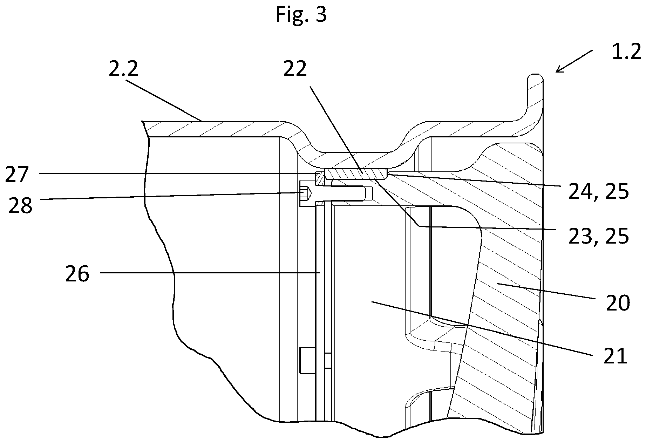

Fig. 3 zeigt in einem dritten Ausführungsbeispiel ausschnittsweise eine alternative erfindungsgemäße Radkonstruktion mit einer Radfelge 1.2 und einer tellerförmigen Radscheibe 20 mit durchbrochenem Speichenfeld und Speichenring 21 aus Aluminium. Die Radfelge 1.2 weist ein fest mit dem Felgenbett 2.2 aus CFK verbundenes ringförmiges Anschlusselement 22 auf. Das Anschlusselement 22 besteht aus glasfaserverstärktem Kunststoff (GFK) und ist in diesem Ausführungsbeispiel beispielhaft durch eine Klebung unlösbar mit dem Felgenbett 2.2 verbunden. Das Material (GFK) des Anschlusselements 22 eignet sich besonders für eine stabile Klebung mit dem CFK des Felgenbetts 2.2.

Die Klebezone ist zwischen einer radial nach innen weisenden, umlaufenden Kontaktfläche des Tiefbetts des Felgenbetts 2.2 und einer dem Felgenbett 2.2 zugewandten, flächig anliegenden Kontaktfläche des ringförmigen Anschlusselements 22 ausgebildet.

Die Klebeverbindung kann an dem fertiggestellten, ausgehärteten Felgenbett 2.2 erfolgen. Alternativ kann die Verklebung unmittelbar während der Herstellung des Felgenbetts 2.2 aus CFK durch Anfügen des ringförmigen Anschlusselements 22 an eine vorgefertigte Preform des Felgenbetts 2.2 und anschließendem Infiltrieren und Aushärten des Matrixmaterials erfolgen.

Das Anschlusselement 22 aus GFK ist besonders leicht und weist dennoch eine hohe Steifigkeit für eine zuverlässige Befestigung der Radscheibe 20 auf.

Das ringförmige Anschlusselement 22 hat einen im Wesentlichen rechteckigen Ringquerschnitt, der sich, die innere Kontur des Felgenbetts 2.2 überragend, radial nach innen erstreckt. An einer radial nach innen weisenden, umlaufenden Anschlussfläche 23 des Anschlusselements 22 und einer axial weisenden, umlaufenden Anschlussfläche 25 liegt eine zu diesen Anschlussflächen 23, 25 korrespondierende, umlaufende Ausnehmung 25 des Speichenrings 21 der Radscheibe 20 korrespondierend an. Durch eine Klemmverbindung ist die Radscheibe 20 aus Aluminium am Anschlusselement 22 befestigt. Für die Realisierung der Klemmverbindung ist ein Klemmring 26 aus Aluminium an der gegensinnig axial weisenden Anschlagfläche 27 des Anschlusselements 22 angeordnet und mit mehreren, über den Umfang der Radfelge 1.2 verteilt angeordneten Befestigungsschrauben 28 mit dem Speichenring 21 gegen das Anschlusselement 22 verspannt.

Das ringförmige Anschlusselement 22 nach diesem Ausführungsbeispiel ermöglicht ebenfalls die Radscheibe 20 in einer kontaktfreien Distanz zum Felgenbett 2.2 anzuordnen und zu befestigen, wobei auch hier die bereits zu den vorstehenden Ausführungsbeispielen erläuterten Vorteile eintreten.

Weiterführend weist das GFK des Anschlusselements 22 ein im Verhältnis zum Wärmeleitwiderstand des Aluminiums der Radscheibe 20 größeren Wärmeleitwiderstand auf, wird im Betrieb des Rades die Weiterleitung der erzeugten Bremswärme auf das Felgenbett 2.2 deutlich gemindert.

Zusätzlich wird durch das GFK des Anschlusselements 22 eine galvanische Trennung der Radscheibe 20 und des Klemmringes 26 gegenüber dem Felgenbett 2.2 aus CFK erreicht, welche eine Korrosion an der Radscheibe 20 und dem Klemmring 26 aus Aluminium infolge der Kohlefasern des CFK vermeidet.

Die ringförmige, umlaufende Ausführung des Anschlusselements 22 und die großflächige Anbindung der Radscheibe 20 an das Anschlusselement 22 sorgen zusätzlich für eine verbesserte Lastverteilung auf das Felgenbett 2.2.

Das mit dem Felgenbett 2.2 fest verbundene Anschlusselement 22 bildet eine universelle, vorgefertigte Einheit der Radfelge 1.2, welche zur individuellen Montage von verschiedenen Radscheiben zur Verfügung steht.

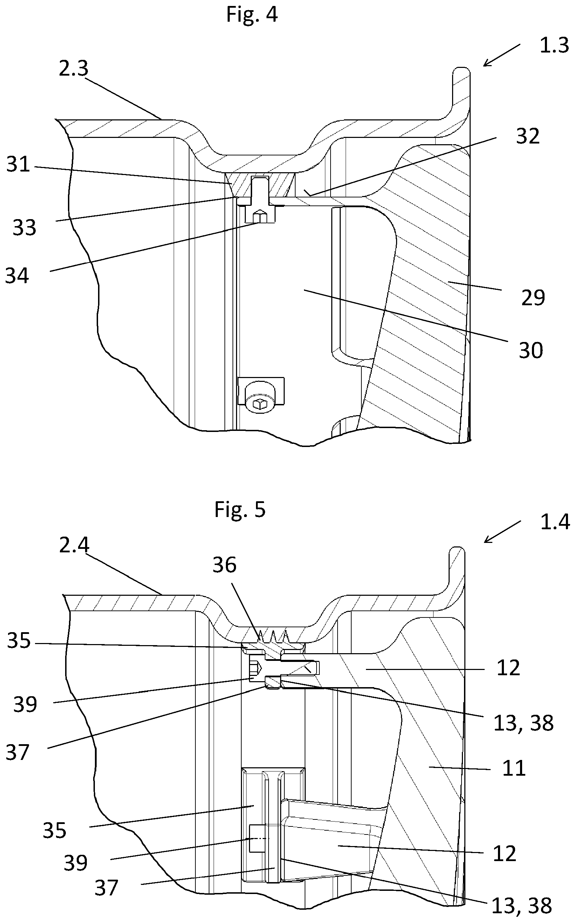

Fig. 4 zeigt in einem vierten Ausführungsbeispiel eine weitere Radkonstruktion mit einer Radfelge 1.3 und einer tellerförmigen Radscheibe 29 mit durchbrochenem Speichenfeld und Speichenring 30 aus Aluminium. Die Radfelge 1.3 weist ähnlich dem Ausführungsbeispiel nach Fig. 3 ein fest mit dem Felgenbett 2.3 aus CFK verbundenes ringförmiges Anschlusselement 31 aus GFK auf. Das Anschlusselement 31 ist ebenso wie das Anschlusselement 22 nach Fig. 3 gegenüber dem Felgenbett 2.3 radial nach innen erstreckt ausgebildet und angeordnet und entsprechend der Beschreibung zum Ausführungsbeispiel nach Fig. 3 durch eine Klebung unlösbar mit dem Felgenbett 2.3 verbunden.

Eine äußere Mantelfläche 32 des Speichenrings 30 der Radscheibe 29 liegt umfangsflächig korrespondierend an einer radial nach innen weisenden, umlaufenden Anschlussfläche 33 des ringförmigen Anschlusselements 31 an. Mit einzelnen, über den Umfang der Radfelge 1.3 verteilt angeordneten Befestigungsschrauben 34 ist die Radscheibe 29 mit dem Anschlusselement verbunden 31.

Das ringförmige Anschlusselement 31 nach diesem Ausführungsbeispiel ermöglicht ebenfalls die Radscheibe 29 in einer kontaktfreien Distanz zum Felgenbett 2. 3 anzuordnen und zu befestigen, wobei auch hier die bereits zu den vorstehenden Ausführungsbeispielen erläuterten Vorteile eintreten.

Diese Ausführung verwirklicht neben den zu den vorstehenden Ausführungsbeispielen erläuterten Vorteilen den weiteren Vorteil, dass die Verbindung der Radscheibe 29 mit der Radfelge 1.3 besonders großflächig und mit radial gerichteter Verspannung gegen das ringförmige Anschlusselement 31 erfolgen kann. Durch diese planradiale Anbindung der Radscheibe an das ringförmige Anschlusselement werden Relativbewegungen zwischen der Radscheibe und dem Anschlusselement, die zu Schwingreibverschleiß führen könnten, weitestgehend vermieden.

Alternativ können anstelle des umlaufend geschlossenen, ringförmigen Anschlusselements 31 mehrere einzelne, über den Umfang der Radfelge 1.3 verteilt angeordnete Anschlusselemente vorgesehen sein, mittels der die Radscheibe 29 mit Speichenfeld und Speichenring 30 oder eine Radscheibe mit Speichenenden mittelbar an das Felgenbett 2.3 angeschlossen wird (nicht dargestellt). Die Anschlusselemente sind vorzugsweise entsprechend entsprechenden Anzahl und Anordnung der Speichen am Umfang des Felgenbetts 2.3 angeordnet und weisen jeweils eine im Wesentlichen scheibenförmige, radial nach innen in den Felgenhohlraum gerichtete Anschlussfläche auf (nicht dargestellt). Diese Ausführung führt neben den bereits zu den vorhergehenden Ausführungsbeispielen erwähnten Vorteilen zu Masseeinsparungen und optisch vorteilhafter Zurückstellung der einzelnen Anschlusselemente.

In einem fünften Ausführungsbeispiel eines Rades nach Fig. 5 ist eine Radfelge 1.4 mit einem Felgenbett 2.4 aus glasfaserverstärktem Thermoplast (Polyamid 6) und mehreren entlang des Umfangs der Radfelge 1.4 in das Felgenbett 2.4 integrierten, ringsegmentförmigen Anschlusselementen 35 aus Stahl dargestellt, die dem mittelbaren Anschluss einer Radscheibe, wie der sternförmigen Radscheibe 11 mit Speichenenden 12 aus Aluminium gemäß dem Ausführungsbeispiel nach Fig. 1b, dienen.

Zum passenden Anschluss der sternförmigen Radscheibe 11, sind die Anschlusselemente 35 in der entsprechenden Anzahl und Anordnung der Speichen 12 der anzuschließenden sternförmigen Radscheibe 11 vorgesehen.

Die ringsegmentförmigen Anschlusselemente 35 weisen dem Felgenbett 2.4 zugewandte und in das Felgenbett 2.4 erstreckte Pinelemente 36 auf, die in das Felgenbett 2.4 integriert sind. Die integrierte Verbindung der Anschlusselemente 35 mit dem Felgenbett 2.4 kann mittels eines Heißpressverfahrens erfolgen, bei dem die Anschlusselemente 35 in das Felgenbett 2.4 (aus Polyamid 6) eingepresst werden. Die hierbei unmittelbar eingepressten Pinelemente 36 bilden jeweils einen tangentialen und axialen Formschluss des Anschlusselements 35 mit dem Felgenbett 2.4.

Die Anschlusselemente 35 weisen jeweils radial nach innen in den Felgenhohlraum erstreckte Flanschstege 37 auf, an denen die Speichenenden 12 der sternförmigen Radscheibe 11 angeschlossen sind. Die Speichenenden 12 sind mit ihren Stirnflächen 13 an jeweils einer seitlichen, axial weisenden Anschlussfläche 38 der Flanschstege 37 angelegt und mittels der Befestigungsschrauben 39 mit den Anschlusselementen 35 und damit an der Radfelge 1.4 verbunden. Über die erfolgte Verbindung der Speichenenden 12 der sternförmigen Radscheibe 11 mit den einzelnen Anschlusselementen 35 werden diese zusätzlich axial fixiert, woraus sich letztlich eine festsitzende, dreidimensional formschlüssige Verbindung der Anschlusselemente 35 mit dem Felgenbett 2.4 ergibt.

Ergänzend zu den Vorteilen der vorstehend beschriebenen Ausführungsbeispiele werden durch diese Ausführung sehr zuverlässige, masseminimierte und optisch besonders unauffällige Verbindungen für den Anschluss von vorzugsweise sternförmigen Radscheiben, wie der Radscheibe 11, an die Radfelge 1.4 erzielt.

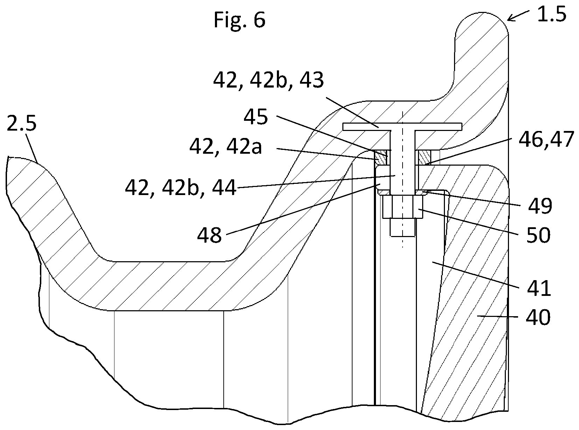

Fig. 6 zeigt in einem sechsten Ausführungsbeispiel eine weitere Radkonstruktion mit einer Radfelge 1.5 und einer tellerförmigen Radscheibe 40 mit durchbrochenem Speichenfeld und Speichenring 41 aus Aluminium. Die Radfelge 1.5 weist ein fest mit dem Felgenbett 2.5 aus CFK verbundenes elfteiliges Anschlusselement 42 auf, welches aus einem Ringteil 42a und zehn Stiftteilen 42b besteht.

Das rotationssymmetrisch zur gedachten Radachse umlaufend ausgebildete Ringteil 42a besteht aus GFK.

Die filigran gestalteten Stiftteile 42b sind um den Umfang der Radfelge 1.5 verteilt angeordnet und bestehen aus Pernifer^{®}. Sie weisen jeweils einen tellerförmigen Kopf 43 und einen Schaft 44 mit einem, am Schaftende ausgebildeten Gewinde auf.

Das mehrteilige Anschlusselement 42 ist im Bereich des Reifensitzes mit dem Felgenbett 2.5 verbunden, wobei das Ringteil 42a an der Innenkontur des Reifensitzes angefügt ist und die Stiftteile 42b teilweise im Felgenbett 2.5 integriert angeordnet sind. Die Stiftteile 42b sind derart dem Felgenbett 2.5 zugeordnet, dass ihre tellerförmigen Köpfe 43 in tangentialer Ausrichtung im Felgenbett 2.5 sitzen und die Schäfte 44 der Stiftteile 42b dabei radial nach innen auf die gedachte Radachse gerichtet sind.

Alle Teile 42a, b sind gegenüber dem Felgenbett 2.5 radial nach innen in den Felgenhohlraum erstreckt ausgebildet, wobei die jeweiligen Schäfte 44 der Stiftteile 42b durch korrespondierende Öffnungen 45 des Ringteils 42a ragen und über den Innendurchmesser des Ringteiles 42a überstehen.

Das Ringteil 42a und die Stiftteile 42b werden unmittelbar bei der Fertigung der Preform des Felgenbetts 2.5 dem Fasermaterial beigeordnet bzw. in das Fasermaterial integriert und während des Fertigungsprozesses mit dem Felgenbett 2.5 in der vorbeschriebenen Anordnung form- und stoffschlüssig zusammengefügt.

Eine äußere Mantelfläche 46 des Speichenrings 41 der Radscheibe 40 liegt umfangsflächig korrespondierend an einer radial nach innen weisenden, umlaufenden Anschlussfläche 47 des Ringteils 42a an.

Der Speichenring 41 weist zehn, zur Anzahl und Anordnung der Schäfte 44 der Stifteile 42b korrespondierende Schlitze 48 auf, wobei bei der Montage der Radscheibe 40 jeder Schlitz 48 zur Aufnahme eines Schaftes 44 dient. Die Größe des Schlitzes 48 realisiert eine beabstandete Positionierung des Stiftteils 42b gegenüber dem Speichenring 41 der Radscheibe 40.

Jeder Schaft 44 wird mit einer Unterlegscheibe 49 aus beispielsweise GFK und mit einer Mutter 50 bestückt und die Schraubverbindung zwischen der Radscheibe 40, dem Ringteil 42a und den Stiftteilen 42b festgezogen. Die Radscheibe 40 ist damit nur mittelbar mit dem Felgenbett 2.5 der Radfelge 1.5 verbunden.

Mit dieser Ausführung erfolgt wiederum eine besonders großflächig Verbindung der Radscheibe 40 mit der Radfelge 1.5 mit gleichmäßiger radial gerichteter Druckverteilung der Verspannung zwischen Radscheibe 40 und Radfelge 1.5 entsprechend der Ausführung nach Fig. 4. Durch die planradiale Anbindung der Radscheibe 40 an das Ringteil 42a werden Relativbewegungen zwischen der Radscheibe 40 und den Teilen 42a, 42a des Anschlusselements 42, die zu Schwingreibverschleiß führen könnten, weitestgehend vermieden.

Im Unterschied zur Ausführung nach Fig. 4 erfolgt die lokale Krafteinleitung der Verschraubungen jedoch direkt in die, im Felgenbett 2.5 integrierten Stiftteile 42b, wodurch das Ringteil 42a weniger durch den Kraftschluss der Verschraubung belastet ist. Das Ringteil 42a aus GFK kann daher im Vergleich zum Anschlusselement 31 nach Fig. 4 noch dünnwandiger und leichter ausgeführt sein.

Das mehrteilige Anschlusselement 42 ist gezielt und effizient auf die Übertragung der wirkenden Kräfte beim Anschluss der Radscheibe 40 und beim Betrieb des Rades ausgebildet, wodurch eine weitere Masseneinsparung an der Radkonstruktion erreicht wird.

Die angeschlossene Radscheibe 40 berührt das Felgenbett 2.5 mit den Stiftteilen 42b nicht, was eine etwaige Kontaktkorrosion an der Radscheibe 40 vermeidet.

Die im Betriebszustand des Rades erzeugte Wärmeentwicklung in der Radscheibe 40 wird durch die besondere Gestaltung der Anbindung der Radscheibe 40 an das mehrteilige Anschlusselement 42 nur im geringen Maße auf das Anschlusselement 42 und das Felgenbett 2.5 übertragen.

Zudem weist der Ringteil 42b des Anschlusselements 42 im Verhältnis zum Wärmeleitwiderstand der Radscheibe 40 aus Aluminium einen größeren Wärmeleitwiderstand auf, so dass das Felgenbett 2.5 zusätzlich von der thermischen Belastung durch die Bremswärme abgeschirmt wird.

Die Stiftteile 42b aus Pernifer^{®} weisen einen annähernd gleichen thermischen Ausdehnungskoeffizient wie der des GFK des Felgenbettes 2.5 auf, so dass außerdem durch das annähernd gleiches Wärmedehnungsverhalten der Stiftteile 42b und des Felgenbetts 2.5 Spannungen im Felgenbett 2.5 vermieden werden.

### Bezugszeichenliste

- 1: Radfelge 1.1, 1.2, 1.3, 1.4, 1.5
- 2: Felgenbett 2.1, 2.2, 2.3, 2.4, 2.5
- 3: tellerförmige Radscheibe mit Speichenring
- 4: Speichenring
- 5: zweiteiliges, ringförmiges Anschlusselement, Schalenteile a, b
- 6: radial erstreckter Flanschring des Schalenteils a, b
- 7: Stirnfläche des Speichenrings
- 8: axial weisende Anschlussfläche des Flanschringes
- 9: Befestigungsschraube
- 10: Trennschicht
- 11: sternförmigen Radscheibe mit Speichenenden
- 12: Speichen, Speichenende
- 13: Stirnfläche des Speichenendes
- 14: fest verbundenes ringförmiges Anschlusselement
- 15: sternförmigen Radscheibe mit Speichenenden
- 16: Speichen, Speichenende
- 17: Trennschicht
- 18: radial nach innen weisende Anschlussfläche
- 19: Flanke der Speiche
- 20: tellerförmige Radscheibe mit Speichenring
- 21: Speichenring
- 22: ringförmiges Anschlusselement
- 23: radial nach innen weisende Anschlussfläche
- 24: axial weisende Anschlussfläche
- 25: Ausnehmung des Speichenrings
- 26: Klemmring
- 27: gegensinnig axial weisende Anschlagfläche
- 28: Befestigungsschraube
- 29: tellerförmige Radscheibe mit Speichenring
- 30: Speichenring
- 31: ringförmiges Anschlusselement
- 32: äußere Mantelfläche des Speichenrings
- 33: radial nach innen weisende Anschlussfläche
- 34: Befestigungsschraube
- 35: ringsegmentförmiges Anschlusselement
- 36: Pinelemente
- 37: Flanschsteg
- 38: axial weisende Anschlussfläche
- 39: Befestigungsschrauben
- 40: tellerförmige Radscheibe mit Speichenring
- 41: Speichenring
- 42: elfteiliges Anschlusselement, Ringteil a, Stiftteil b
- 43: tellerförmiger Kopf
- 44: Schaft des Stiftteils
- 45: Öffnung des Ringteils
- 46: äußere Mantelfläche des Speichenrings
- 47: radial nach innen weisende Anschlussfläche des Ringteils
- 48: Schlitz
- 49: Unterlegscheibe
- 50: Mutter

## Patentansprüche

1. Rad, insbesondere für Kraftfahrzeuge, mit einer Radfelge (1) und einer Radscheibe (3, 11, 20, 29, 40), wobei die Radfelge (1) ein Felgenbett (2) aus Faserverbundmaterial aufweist und die Radscheibe (3, 11, 20, 29, 40) mittels eines Anschlusselementes (5, 14, 22, 31, 35, 42) mit der Radfelge (1), insbesondere dem Felgenbett (2) der Radfelge (1), verbunden ist, wobei das Anschlusselement (5, 14, 22, 31, 35, 42) ein Separations- und Distanzmittel zur mittelbaren Anbindung der Radscheibe (3, 11, 20, 29, 40) an das Felgenbett(2) ist und derart ausgebildet und dem Felgenbett (2) zugeordnet ist, dass die verbundene Radscheibe (3, 11, 20, 29, 40) gegenüber dem Felgenbett (2) berührungsfrei angeordnet ist.

2. Rad nach Anspruch 1, **dadurch gekennzeichnet, dass** das Anschlusselement (5, 14, 22, 31, 35, 42) wenigstens eine Anschlussfläche (8, 18, 23, 24, 33, 38, 47) aufweist, die korrespondierend mit einer bzw. jeweils einer Anschlussfläche (7, 13, 25, 32, 46) der Radscheibe (3, 11, 20, 29, 40) ausgebildet und angeordnet ist.

3. Rad nach Anspruch 1 oder 2, **dadurch gekennzeichnet, dass** das Anschlusselement (5, 14, 22, 31, 35) im Bereich eines Tiefbetts dem Felgenbett (2) zugeordnet ist.

4. Rad nach einem der vorangehenden Ansprüche, **dadurch gekennzeichnet, dass** das Anschlusselement (5, 14, 22, 31, 35, 42) sich in einen Felgenhohlraum der Radfelge (1) erstreckend ausgebildet ist.

5. Rad nach einem der vorangehenden Ansprüche, **dadurch gekennzeichnet, dass** das Anschlusselement (14, 22, 31, 35, 42) fest mit dem Felgenbett (2) verbunden ist.

6. Rad nach einem der vorangehenden Ansprüche, **dadurch gekennzeichnet, dass** das Anschlusselement (35) zumindest abschnittsweise im Felgenbett (2) integriert angeordnet ist.

7. Rad nach einem der vorangehenden Ansprüche, **dadurch gekennzeichnet, dass** das Anschlusselement (5, 42) aus einem Material besteht, welches einen im Verhältnis zum thermischen Ausdehnungskoeffizient des Faserverbundmaterials des Felgenbettes (2) zumindest ähnlichen thermischen Ausdehnungskoeffizient aufweist.

8. Rad nach einem der vorangehenden Ansprüche, **dadurch gekennzeichnet, dass** in einem Kontaktbereich zwischen dem Felgenbett (2) und dem Anschlusselement (5, 14) eine Trennschicht (10, 17) angeordnet ist.

9. Rad nach einem der vorangehenden Ansprüche **dadurch gekennzeichnet, dass** in einem Anschlussbereich zwischen dem Anschlusselement (5) und der Radscheibe (11) eine Trennschicht (10) angeordnet ist.

10. Rad nach Anspruch 8 oder 9, **dadurch gekennzeichnet, dass** das Anschlusselement und / oder die Trennschicht (10) eine Elastizität aufweist, die größer als die Elastizität des Faserverbundmaterials des Felgenbettes (2) ist.

11. Rad nach einem der Ansprüche 8 bis 10, **dadurch gekennzeichnet, dass** das Anschlusselement (22, 31, 42) und / oder die Trennschicht (10, 17) aus einem elektrisch nichtleitendem Material besteht.

12. Rad nach einem der Ansprüche 8 bis 11, **dadurch gekennzeichnet, dass** die Trennschicht (10, 17) aus einem Material besteht, welches einen im Verhältnis zum Wärmeleitwiderstand des Materials des Anschlusselementes (5, 14) größeren Wärmeleitwiderstand aufweist.

13. Rad nach einem der vorangehenden Ansprüche, **dadurch gekennzeichnet, dass** das Anschlusselement (22, 31, 42) aus einem Material besteht, welches einen im Verhältnis zum Wärmeleitwiderstand des Materials der Radscheibe (20, 29) größeren Wärmeleitwiderstand aufweist.

14. Rad nach einem Ansprüche 8 bis 13, **dadurch gekennzeichnet, dass** das Anschlusselement (22, 31, 42) und /oder die Trennschicht (10, 17) aus glasfaserverstärktem Kunststoff (GFK) besteht.

15. Rad nach einem der vorangehenden Ansprüche, **dadurch gekennzeichnet, dass** das Anschlusselement und /oder die Radscheibe ein oder mehrere Dichtelemente aufweist.

16. Rad nach einem der vorangehenden Ansprüche, **dadurch gekennzeichnet, dass** das Anschlusselement (5, 14, 22, 31, 42) ringförmig ausgebildet ist.

17. Rad nach einem der vorangehenden Ansprüche, **dadurch gekennzeichnet, dass** das Anschlusselement (5, 42) mehrteilig ausgebildet ist.

18. Rad nach einem der vorangehenden Ansprüche, **dadurch gekennzeichnet, dass** die Radscheibe (11) mittels mehrerer, vorzugsweise umfänglich der Radfelge (1) angeordneter Anschlusselemente (35) verbunden ist.

## Claims

1. Wheel, in particular for motor vehicles, with a wheel rim (1) and a wheel disc (3, 11, 20, 29, 40), where the wheel rim (1) has a rim base (2) made of fibre composite material and the wheel disc (3, 11, 20, 29, 40) is joined by means of a connecting element (5, 14, 22, 31, 35, 42) to the wheel rim (1), in particular to the rim base (2) of the wheel rim (1), where the connecting element (5, 14, 22, 31, 35, 42) is a separating and spacing means for indirectly connecting the wheel disc (3, 11, 20, 29, 40) to the rim base (2) and is designed and assigned to the rim base (2) in such a way that the joined wheel disc (3, 11, 20, 29, 40) is arranged with respect to the rim base (2) without touching.

2. Wheel according to claim 1, **characterised in that** the connecting element (5, 14, 22, 31, 35, 42) has at least one connecting surface (8, 18, 23, 24, 33, 38, 47) which or respectively each of which is designed and arranged to correspond with a connecting surface (7, 13, 25, 32, 46) of the wheel disc (3, 11, 20, 29, 40).

3. Wheel according to claim 1 or 2, **characterised in that** the connecting element (5, 14, 22, 31, 35) in the region of a drop centre is assigned to the rim base (2).

4. Wheel according to one of the preceding claims, **characterised in that** the connecting element (5, 14, 22, 31, 35, 42) is designed extending into a rim cavity of the wheel rim (1).

5. Wheel according to one of the preceding claims, **characterised in that** the connecting element (14, 22, 31, 35, 42) is fixedly joined to the rim base (2).

6. Wheel according to one of the preceding claims, **characterised in that** the connecting element (35) is arranged integrated at least in sections into the rim base (2) .

7. Wheel according to one of the preceding claims, **characterised in that** the connecting element (5, 42) consists of a material which in relation to the coefficient of thermal expansion of the fibre composite material of the rim base (2) has at least a similar coefficient of thermal expansion.

8. Wheel according to one of the preceding claims, **characterised in that** a separating layer (10, 17) is arranged in a contact region between the rim base (2) and the connecting element (5, 14).

9. Wheel according to one of the preceding claims, **characterised in that** a separating layer (10) is arranged in a connection region between the connecting element (5) and the wheel disc (11).

10. Wheel according to claim 8 or 9, **characterised in that** the connecting element and/or the separating layer (10) has an elasticity that is greater than the elasticity of the fibre composite material of the rim base (2).

11. Wheel according to one of claims 8 to 10, **characterised in that** the connecting element (22, 31, 42) and/or the separating layer (10, 17) consists of an electrically nonconductive material.

12. Wheel according to one of claims 8 to 11, **characterised in that** the separating layer (10, 17) consists of a material which in relation to the thermal resistivity of the material of the connecting element (5, 14) has a greater thermal resistivity.

13. Wheel according to one of the preceding claims, **characterised in that** the connecting element (22, 31, 42) consists of a material which in relation to the thermal resistivity of the material of the wheel disc (20, 29) has a greater thermal resistivity.

14. Wheel according to one claims 8 to 13, **characterised in that** the connecting element (22, 31, 42) and/or the separating layer (10, 17) consists of glass-fibre reinforced plastic (GFRP).

15. Wheel according to one of the preceding claims, **characterised in that** the connecting element and/or the wheel disc has one or more sealing elements.

16. Wheel according to one of the preceding claims, **characterised in that** the connecting element (5, 14, 22, 31, 42) is ring-shaped.

17. Wheel according to one of the preceding claims, **characterised in that** the connecting element (5, 42) is designed in several parts.

18. Wheel according to one of the preceding claims, **characterised in that** the wheel disc (11) is connected by means of several connecting elements (35), preferably arranged circumferentially on the wheel rim (1).

## Revendications

1. Roue, en particulier de véhicules à moteur, comprenant une jante (1) et un disque de roue (3, 11, 20, 29, 40), sachant que la jante (1) présente une base de jante (2) en matériau composite fibreux et que le disque de roue (3, 11, 20, 29, 40) est relié au moyen d'un élément de raccordement (5, 14, 22, 31, 35, 42) avec la jante (1), en particulier avec le fond (2) de la jante (1), sachant que l'élément de raccordement (5, 14, 22, 31, 35, 42) est un moyen de séparation et d'écartement pour raccorder indirectement le disque de roue (3, 11, 20, 29, 40) à la base de jante (2), et que cet élément est configuré et affecté à la base de jante (2) de sorte que le disque de roue relié (3, 11, 20, 29, 40) est disposé sans contact en face de la base de jante (2).

2. Roue selon la revendication 1, **caractérisée en ce que** l'élément de raccordement (5, 14, 22, 31, 35, 42) présente au moins une surface de raccordement (8, 18, 23, 24, 33, 38, 47) qui est configurée et disposée pour épouser une surface ou respectivement une surface de raccordement (7, 13, 25, 32, 46) du disque de roue (3, 11, 20, 29, 40).

3. Roue selon la revendication 1 ou 2, **caractérisée en ce que** l'élément de raccordement (5, 14, 22, 31, 35) est affecté à la base de jante (2) dans une zone profonde.

4. Roue selon l'une des revendications précédentes, **caractérisée en ce que** l'élément de raccordement (5, 14, 22, 31, 35, 42) est configuré de façon à s'étendre dans une cavité creuse de la jante (1).

5. Roue selon l'une des revendications précédentes, **caractérisée en ce que** l'élément de raccordement (14, 22, 31, 35, 42) est relié fermement avec la base de jante (2).

6. Roue selon une ou plusieurs revendications précédentes, **caractérisée en ce que** l'élément de raccordement (35) est disposé intégré au moins de façon segmentée dans la base de jante (2).

7. Roue selon l'une des revendications précédentes, **caractérisée en ce que** l'élément de raccordement (5, 42) se compose d'un matériau présentant un coefficient de dilatation thermique dans des proportions au moins similaires au coefficient de dilatation thermique du matériau composite fibreux composant la base de jante (2).

8. Roue selon l'une des revendications précédentes, **caractérisée en ce que** dans la zone de contact entre la base de jante (2) et l'élément de raccordement (5, 14) est configurée une couche séparatrice (10, 17).

9. Roue selon l'une des revendications précédentes, **caractérisée en ce que** dans une zone de jonction entre l'élément de raccordement (5) et le disque de roue (11) est disposée une couche séparatrice (10).

10. Roue selon la revendication 8 ou 9, **caractérisée en ce que** l'élément de raccordement et/ou la couche séparatrice (10) présente-nt une élasticité supérieure à l'élasticité du matériau composite fibreux de la base de jante (2).

11. Roue selon l'une des revendications 8 à 10, **caractérisée en ce que** l'élément de raccordement (22, 31, 42) et / ou la couche séparatrice (10, 17) se compose-nt d'un matériau non électroconducteur.

12. Roue selon l'une des revendications 8 à 11, **caractérisée en ce que** la couche de séparation (10, 17) est formée d'un matériau présentant une résistance à la conductivité thermique proportionnellement plus élevée que la résistance à la conductivité thermique de l'élément de raccordement (5, 14) .

13. Roue selon l'une des revendications précédentes, **caractérisée en ce que** l'élément de raccordement (22, 31, 42) est formé d'un matériau présentant une résistance à la conductivité thermique proportionnellement plus élevée que la résistance à la conductivité thermique du matériau du disque de roue (20, 29).

14. Roue selon l'une des revendications 8 à 13, **caractérisée en ce que** l'élément de raccordement (22, 31, 42) et / ou la couche séparatrice (10, 17) se compose-nt d'une matière plastique renforcée de fibre de verre.

15. Roue selon l'une des revendications précédentes, **caractérisée en ce que** l'élément de raccordement et/ou le disque de roue présente-nt un ou plusieurs éléments d'étanchéité.

16. Roue selon l'une des revendications précédentes, **caractérisée en ce que** l'élément de raccordement (5, 14, 22, 31, 42) est configuré de forme annulaire.

17. Roue selon l'une des revendications précédentes, **caractérisée en ce que** l'élément de raccordement (5, 42) est configuré en plusieurs parties.

18. Roue selon l'une des revendications précédentes, **caractérisée en ce que** le disque de roue (11) est raccordé au moyen de plusieurs éléments de raccordement (1) disposés de préférence autour de la jante (35).
